(19) **Europäisches Patentamt**

**European Patent Office**

**Office européen des brevets**

(11) **EP 1 228 100 B1**

(12) **EUROPÄISCHE PATENTSCHRIFT**

(45) Veröffentlichungstag und Bekanntmachung des Hinweises auf die Patenterteilung:
**20.07.2005   Patentblatt 2005/29**

(51) Int Cl.⁷: **C08F 2/00**, B01J 19/22, C08F 2/10

(21) Anmeldenummer: **00958360.0**

(22) Anmeldetag: **02.08.2000**

(86) Internationale Anmeldenummer:
**PCT/EP2000/007480**

(87) Internationale Veröffentlichungsnummer:
**WO 2001/016185 (08.03.2001 Gazette 2001/10)**

(54) **POLYMERISATZUSAMMENSETZUNG UND EIN VERFAHREN ZU DESSEN HERSTELLUNG**

POLYMERIZATE COMPOSITION AND A METHOD FOR PRODUCING THE SAME

COMPOSITION POLYMERE ET SON PROCEDE DE PRODUCTION

(84) Benannte Vertragsstaaten:
**AT BE CH CY DE DK ES FI FR GB GR IE IT LI LU MC NL PT SE**

(30) Priorität: **30.08.1999  DE 19941072**

(43) Veröffentlichungstag der Anmeldung:
**07.08.2002   Patentblatt 2002/32**

(73) Patentinhaber: **Stockhausen GmbH**
**47805 Krefeld (DE)**

(72) Erfinder:
• **BREHM, Helmut**
**D-47800 Krefeld (DE)**

• **HARTAN, Hans-Georg**
**D-47625 Kevelaer (DE)**

(74) Vertreter: **Wolff, Felix, Dr. et al**
**Kutzenberger & Wolff**
**Theodor-Heuss-Ring 23**
**50668 Köln (DE)**

(56) Entgegenhaltungen:
**EP-A- 0 553 689         EP-A- 0 630 909**
**DE-A- 19 748 153**

**Beschreibung**

Die vorliegende Erfindung betrifft wasserlösliche, vorzugsweise pulverförmige Polymerisatzusammensetzungen erhältlich durch kontinuierliche Polymerisation von mindestens einem ungesättigten Monomeren und deren Verwendung. Die vorliegende Erfindung betrifft ferner ein Verfahren zur Herstellung der Polymerisatzusammensetzungen.

Polymere aus nichtionogenen, anionischen sowie kationischen Vinylmonomeren werden als Flockungsmittel bei der Abwasserbehandlung, Erz- und Kohleaufbereitung sowie Papierherstellung verwendet.

Die Flockungsmittel werden z.B. zur Beschleunigung der Entwässerung von feststoffhaltigen Trüben, wie beispielsweise Klärschlamm, eingesetzt. Als Entwässerungsmaschinen kommen Kammerfilterpressen, Zentrifugen oder Siebbandpressen oder dergleichen zum Einsatz.

Um eine hohe Durchsatzleistung auf den genannten Maschinen bei optimaler Entwässerung und Filtrat-(Zentrat-)klarheit zu erreichen, muß die Art und Menge des Flockungsmittels sorgfältig auf den Schlamm abgestimmt werden, weil die zu entwässernden Schlämme je nach Herkunft, z. B. aus Häfen, Teichen oder kommunalen Kläranlagen eine unterschiedliche Zusammensetzung aufweisen.

Aber auch bei einer bestimmten Schlammart können Veränderungen der Inhaltsstoffe des Schlamms dessen Entwässerungsverhalten verändern und somit bei konstanter Flockungsmitteldosierung zu einer mangelhaften Entwässerung oder einer zunehmenden Trübung des Filtrats führen. Besonders deutlich treten diese Änderungen bei der Abwasserreinigung von Gemischen aus Kommunal- und Industrieabwässern auf. Durch die Änderung der Schlamminhaltsstoffe ist aber auch oftmals eine einfache Erhöhung der Flockungsmittelmenge nicht ausreichend, um die Entwässerungs- bzw. Filtratqualität zu halten. In diesen Fällen muß ein anderes Flockungsmittel mit höherer oder niedrigerer Ladung oder höherem oder niedrigerem Molgewicht eingesetzt werden.

Beispielsweise wird in der WO 95/33697 ein Verfahren zur Entwässerung von Suspensionen vorgeschlagen, bei dem zwei verschiedene Entwässerungshilfsmittel nacheinander dosiert werden. Ein niedermolekulares, ionisches Polymer hat die Aufgabe, die Trübstoffe zu coagulieren, während das hochmolekulare Polymer die Flockung bewirkt, wobei die Menge des niedermolekularen ionischen Polymers der Schlammzusammensetzung, d. h. dem Entwässerungsergebnis, laufend angepaßt wird. Aber auch das hochmolekulare, die Flockung bewirkende Polymer muß bezüglich seines Molgewichts und seiner Ladung auf den Schlamm abgestimmt werden. Zur Auswahl stehen laut obiger Patentanmeldung Copolymere, die aus 2,5 Mol-% kationischem Monomer und 97,5 Mol-% Acrylamid bis 65 Mol-% kationischem Monomer und 35 Mol-% Acrylamid aufgebaut sind.

Es stellt sich deshalb die Aufgabe ein Flockungsmittel bereitzustellen, mit dem ein breites Spektrum unterschiedlicher Feststoffe aus Suspensionen schneller und mit einem höheren Abscheidegrad abgetrennt werden können und das auf eine Änderung der Trübe weniger empfindlich reagiert.

Die Aufgabe wird erfindungsgemäß durch die Bereitstellung einer wasserlöslichen, vorzugsweise pulverförmigen Polymerisatzusammensetzung gelöst, die durch kontinuierliche Polymerisation von mindestens einem ungesättigten Monomeren erhältlich ist, wobei mindestens ein die Polymerisation beeinflussender Parameter gemäß einem wiederkehrenden Muster geändert wird.

Die kontinuierliche Polymerisation erfolgt nach jedem dem Fachmann bekannten Verfahren. Vorzugsweise ist die Polymerisation eine Lösungspolymerisation. Vorzugsweise wird die kontinuierliche Polymerisation auf einem bewegten Träger durchgeführt, wie er z.B. in der EP 0 296 331 B1 oder in der EP 0 228 638 B1 gelehrt wird. In der EP 0 296 331 B1 und in der EP 0 228 638 B1 ist der bewegte Träger ein Förderband, auf das eine wäßrige, von Sauerstoff befreite Monomerenlösung dosiert wird, die nach Zusatz von Katalysatoren unter Freiwerden der Polymerisationswärme zu einem festen Gel polymerisiert. Am Ende des Förderbandes wird das feste Gel abgenommen und vorzugsweise nach bekannten Verfahren kontinuierlich zerkleinert, getrocknet, gemahlen und gesiebt.

Die einzusetzenden Monomeren können nichtionogen, anionisch oder kationisch sein. Bevorzugte Monomere sind (Meth-)acrylsäure und ihre Salze, (Meth-)acrylsäureester, (Meth-)acrylsäureamide, 2-Acrylamido-2-methylpropansäure und ihre Salze, Allylsulfonsäure und ihre Salze sowie Diallyl-dialkylammoniumchloride. Besonders bevorzugte Monomere sind Acrylamid, Acrylsäure und ihre Salze, Dialkylaminoalkyl-(meth-)acrylate und Dialkylaminoalkyl-(meth-)acrylamide als Salz oder in quaternierter Form.

Die Monomeren können allein in Lösung oder, um Co- und Terpolymerisatzusammensetzungen zu erhalten, in Mischung mit anderen Monomeren polymerisiert werden. Der Fachmann erkennt, daß auch mehr als drei Monomeren miteinander polymerisiert werden können.

Die Polymerisation kann durch chemische Katalyse und/oder energetische Strahlung/Licht (z.B. UV-Licht) initiiert werden. Bevorzugte Katalysatoren sind organische und anorganische Perverbindungen wie Persulfate und Alkyl(hydro)peroxide in Verbindung mit reduzierenden Substanzen wie Alkalisulfiten, ggf. unter Zusatz von Eisen(II) salzen. Bevorzugte Photoinitiatoren sind 2,2-Azobis-(2-amidinopropan)hydrochlorid und/oder Benzoinderivate.

Erfindungsgemäß muß mindestens ein die Polymerisation beeinflussender Parameter gemäß einem wiederkehrenden Muster geändert werden.

Gemäß einem wiederkehrenden Muster im Sinne der Erfindung bedeutet, daß die die Polymerisation beeinflussenden Parameter in einer beliebigen, sich jedoch in regelmäßigen zeitlichen Abständen wiederholenden Weise innerhalb einer dem Fachmann geläufigen sinnvollen Bandbreite, vorzugsweise kontinuierlich, geändert werden.

Vorzugsweise ist das Muster eine Schwingung um einen frei wählbaren Mittelwert. Vorzugsweise ist diese Schwingung harmonisch oder unharmonisch und vorzugsweise ungedämpft.

Vorzugsweise erfolgt die Änderung der Parameter vor dem Beginn der Polymerisation, beispielsweise im Zulauf der vorzugsweise wässrigen Monomerlösung auf den bewegten Träger, wobei vorzugsweise folgende Parameter verändert werden:

a) die Zusammensetzung der Monomerlösung bei der Herstellung von Co- und Terpolymeren, indem man die Menge mindestens eines Monomeren gemäß einem wiederkehrenden Muster verändert,

b) die Konzentration der Monomerlösung, indem man die Menge eines Monomeren höherer und/oder niedrigerer Konzentration gemäß einem wiederkehrenden Muster verändert dosiert,

c) die Katalysatormenge, indem man die Konzentration des Katalysators oder Katalysatorsystems gemäß einem wiederkehrenden Muster erhöht und wieder erniedrigt,

d) die Molgewichtsreglermenge, indem man die Menge der Molgewichtsreglerlösung gemäß einem wiederkehrenden Muster erhöht und wieder erniedrigt,

e) der pH-Wert der Monomerlösung, indem man die Säure- bzw. Alkalidosierung gemäß einem wiederkehrenden Muster erhöht und wieder erniedrigt.

Von diesen Parametern können einer oder mehrere gleichzeitig oder zeitlich versetzt verändert werden.

Vorzugsweise ist das Muster eine Schwingung um einen frei wählbaren Mittelwert. Die Amplitude und Frequenz der Schwingung sind beliebig wählbar. Während die Frequenz, die Zeit in der das Muster der Veränderung eines Polymerisationsparameters einmal durchgeführt wird, durch die Dimensionierung der Anlagenteile bestimmt wird, ist die Amplitude, die Höhe der kontinuierlich durchgeführten Veränderung, entscheidend für die anwendungstechnischen Eigenschaften der Polymerisatzusammensetzung.

Der Fachmann erkennt, daß die Veränderung eines Parameters zur Veränderung anderer Polymerisationsparameter führen kann. Wird z.B. die Katalysatordosierung im Reaktorzulauf einer Mengenänderung unterworfen, ändert sich laufend die Radikalkonzentration in der Monomerlösung und damit die Polymersationsgeschwindigkeit - erkennbar am schwingenden Temperaturverlauf - auf dem Polymerisationsband.

Die erfindungsgemäße Polymerisatzusammensetzung läßt sich besonders vorteilhaft zur Flockung vorzugsweise von Wasserinhaltsstoffen und/oder zur Entwässerung von Suspensionen einsetzen. Diese Verwendung ist deshalb ebenfalls Gegenstand der vorliegenden Erfindung.

Ein weiterer Gegenstand der vorliegenden Erfindung ist ein Verfahren zur kontinuierlichen Herstellung von Polymerisatzusammensetzungen durch Polymerisation von mindestens einem ungesättigten Monomeren, bei dem mindestens ein die Polymerisation beeinflussender Parameter gemäß einem wiederkehrenden Muster geändert wird.

Die Polymerisation erfolgt nach jedem dem Fachmann bekannten Verfahren. Vorzugsweise ist die Polymerisation eine Lösungspolymerisation. Vorzugsweise wird die Polymerisation jedoch auf einem bewegten Träger durchgeführt, wie er z.B. in der EP 0 286 331 B1 oder in der EP 0 228 638 B1 gelehrt wird. In der EP 0 296 331 B1 und in der EP 0 228 638 B1 ist der bewegte Träger ein Förderband, auf das eine wäßrige, von Sauerstoff befreite Monomerenlösung dosiert wird, die nach Zusatz von Katalysatoren unter Freiwerden der Polymerisationswärme zu einem festen Gel polymerisiert. Am Ende des Förderbandes wird das feste Gel abgenommen und vorzugsweise nach bekannten Verfahren kontinuierlich zerkleinert, getrocknet, gemahlen und gesiebt.

Die Monomeren können beliebige vorzugsweise ungesättigte Monomere sein. Bevorzugte Monomere sind jedoch (Meth-)acrylsäure und ihre Salze, (Meth-)acrylsäureester, (Meth-)acrylsäureamide, 2-Acrylamido-2-methylpropansäure und ihre Salze, Allylsulfonsäure und ihre Salze sowie Diallyl-dialkylammoniumchloride. Besonders bevorzugte Monomere sind Acrylamid, Acrylsäure und ihre Salze, Dialkylaminoalkyl-(meth-)acrylate und Dialkylaminoalkyl-(meth-)acrylamide als Salz oder in quaternierter Form.

Die Monomeren können allein in Lösung oder um Co- und Terpolymerisatzusammensetzungen zu erhalten in Mischung mit andern Monomeren polymerisiert werden. Der Fachmann erkennt, daß auch mehr als drei Monomeren miteinader polymerisiert werden können.

Die Polymerisation kann durch chemische Katalyse und/oder energetische Strahlung/Licht (z.B. UV-Licht) initiiert werden. Bevorzugte Katalysatoren sind organische und anorganische Perverbindungen wie Persulfate und Alkyl(hydro)peroxide in Verbindung mit reduzierenden Substanzen wie Alkalisulfiten, ggf. unter Zusatz von Eisen(II)salzen. Bevorzugte Photoinitiatoren sind 2,2-Azobis-(2-amidinopropan)hydrochlorid und/oder Benzoinderivaten.

Erfindungsgemäß wird mindestens ein die Polymerisation beeinflussender Parameter gemäß einem wiederkehrenden Muster geändert.

Gemäß einem wiederkehrenden Muster im Sinne der Erfindung bedeutet, daß die die Polymerisation beeinflussenden Parameter in einer beliebigen, jedoch sich in regelmäßigen zeitlichen Abständen wiederholenden Weise innerhalb einer dem Fachmann geläufigen sinnvollen Bandbreite, vorzugsweise kontinuierlch, geändert werden.

Vorzugsweise ist das Muster eine Schwingung um einen frei wählbaren Mittelwert. Vorzugsweise ist diese Schwingung harmonisch oder unharmonisch und vorzugsweise ungedämpft.

Vorzugsweise erfolgt die Änderung der Parameter vor dem Beginn der Polymerisation beispielsweise im Zulauf der vorzugsweise wässrigen Monomerlösung auf den bewegten Träger, wobei vorzugsweise folgende Parameter verändert werden:

a) die Zusammensetzung der Monomerlösung bei der Herstellung von Co- und Terpolymeren, indem man die Menge mindestens eines Monomeren gemäß einem wiederkehrenden Muster verändert,

b) die Konzentration der Monomerlösung, indem man die Menge eines Monomeren höherer und/oder niedrigerer Konzentration gemäß einem wiederkehrenden Muster verändert dosiert,

c) die Katalysatormenge, indem man die Konzentration des Katalysators oder Katalysatorsystems gemäß einem wiederkehrenden Muster erhöht und wieder erniedrigt,

d) die Molgewichtsreglermenge, indem man die Menge der Molgewichtsreglerlösung gemäß einem wiederkehrenden Muster erhöht und wieder erniedrigt,

e) der pH-Wert der Monomerlösung, indem man die Säure- bzw. Alkalidosierung gemäß einem wiederkehrenden Muster erhöht und wieder erniedrigt.

Von diesen Parametern können einer oder mehrere gleichzeitig oder zeitlich versetzt verändert werden.

Vorzugsweise ist das Muster eine Schwingung um einen frei wählbaren Mittelwert. Die Amplitude und Frequenz der Schwingung sind beliebig wählbar. Während die Frequenz, die Zeit in der das Muster der Veränderung eines Polymerisationsparameters einmal durchgeführt wird durch die Dimensionierung der Anlagenteile bestimmt wird, ist die Amplitude, die Höhe der kontinuierlich durchgeführten Veränderung entscheidend für die anwendungstechnischen Eigenschaften der Polymerisatzusammensetzung.

Der Fachmann erkennt, daß die Veränderung eines Parameters zur Veränderung anderer Polymerisationsparameter führen kann. Wird z.B. die Katalysatordosierung im Reaktorzulauf einer Mengenänderung unterworfen, ändert sich laufend die Radikalkonzentration in der Monomerlösung und damit die Polymersationsgeschwindigkeit - erkennbar am schwingenden Temperaturverlauf - auf dem Polymerisationsband.

Zur Durchführung dieser Verfahrensvariante wird die in der EP 0296331, Beispiel 4 und Fig. 2 beschriebene kontinuierliche Polymerisation dahingehend verändert, daß über die Dosierventile 28 und 30 der Massedurchfluß der Katalysatorlösungen nach einem vorgewählten Muster mit einem Regler in regelmäßigen zeitlichen Abständen wiederkehrend verändert werden.

In einer bevorzugten Ausführungsform des erfindungsgemäßen Verfahrens wird in den konstanten Zulaufstrom einer mit Stickstoff gespülten Acrylamidlösung oder einer Monomerlösung aus Acrylamid und einem kationischen Monomer eine konstante Menge an Katalysatorlösung dosiert. Aus einer weiteren Vorlage wird die Lösung eines kationischen Monomers mit sich ständig in Form einer sinusförmigen Schwingung ändernden Mengen dosiert. Die sich ändernde Monomerkonzentration führt aufgrund der exothermen Reaktion zu einer sich ständig ändernden Temperatur im Polymerisat auf dem Polymerisationsband. Die am Trocknerende im Abstand von 5 Min. gezogenen Proben zeigen deutlich die sich ändernde Kationizität, die um einen Mittelwert schwingt.

In einer weiteren bevorzugten Ausführungsform des erfindungsgemäßen Verfahrens wird ein Molgewichtsregler wie z.B. Ameisensäure, Essigsäure oder Isopropanol in eine kationische Monomerenlösung dosiert und dabei gemäß einem wiederkehrenden Muster geändert. Durch diese Verfahrensweise erhält man eine Polymerisatzusammensetzung, deren Molekulargewichtsspektrum von niedrigmolekularen, hochkationischen bis zu hochmolekularen niedrigkationischen Polymeranteilen reicht.

In einer anderen bevorzugten Ausführungsform des erfindungsgemäßen Verfahrens wird zu einer dem Polymerisationsband konstant zufließende Monomerlösung, die ein nichtionogenes und ein kationisches Monomer sowie den Katalysator und einen Molgewichtsregler enthält, zusätzlich eine sich periodisch ändernde Menge des nichtionogenen Monomeren dosiert. Das erhaltene CoPolymer wird nicht nur gemäß einem wiederkehrenden Muster in seiner Zusammensetzung bzw. Ladungsdichte sondern auch in seinem Molgewicht bzw. seiner Lösungsviskosität verändert.

Eine weitere bevorzugte Ausführungsform des erfindungsgemäßen Verfahrens ist die Herstellung von Terpolymerisatzusammensetzungen. Beispielsweise wird in den dem Polymerisationsband konstant zufließenden Strom einer Monomerlösung aus Acrylamid, quaterniertem Dimethylaminopropyl-acrylamid, mindestens einem Katalysator und einem Molekulargewichtsregler eine sich gemäß einem wiederkehrenden Muster ändernde Menge einer Lösung von quaterniertem Dimethylaminoethylacrylat dosiert. Bei dieser Verfahrensvariante ändert sich zwangsläufig die Molekulargewichtsregler- und die Katalysatorkonzentration. Um dies zu vermeiden, muß die Lösung des quaternierten Dimethylaminoethylacrylats ebenfalls Molekulargewichtsregler und/oder Katalysator enthalten.

In einer anderen bevorzugten Ausführungsform erfolgt die Polymerisation auf zwei parallel betriebenen Polymerisationsanlagen. Auf den Polymerisationsbändern erfolgt die Änderung der die Polymerisation beeinflussenden Parameter jeweils phasenverschoben, d. h., wenn z. B. die Monomerenmenge auf der einen Polymerisationsanlage dem Maximum zustrebt, nähert sich die auf dem anderen Polymerisationsanlagen dem Minimum. Am Ende der Polymerisationsanlagen werden die beiden Polymerstränge, vorzugsweise Polymergele, nur einem Trockner zugeführt.

Durch diese Vorgehensweise ist die Menge an Polymerisat, die dem Trockner zugeführt wird nahezu konstant und es wird Über- oder Untertrocknung im Trockner vermieden. Weiterhin werden Probleme in den nachfolgenden Mühlen durch unterschiedliche Wassergehalte und damit schwankende Komelastizität reduziert.

Die erfindungsgemäße Polymerisatzusammensetzung hat den Vorteil, daß sie einfach herzustellen ist und daß sie eine große Bandbreite z.B. von Molekulargewichten und/oder Ionogenitäten aufweist. Die erfindungsgemäße Polymerisatzusammensetzung eignet sich insbesondere als Flockungsmittel und/oder zur Entwässerung von Suspensionen, wobei mit der erfindungsgemäßen Polymerisatzusammensetzung ein breites Spektrum unterschiedlicher Feststoffe aus Suspensionen schneller und mit einem höheren Abscheidegrad abgetrennt werden können und die Polymerisatzusammensetzung auf eine Änderung der Trübe weniger empfindlich reagiert als Polymerisate gemäß dem Stand der Technik. Mit einer sehr kleinen Anzahl von Polymerisatzusammensetzungen kann eine große Zahl von Flockungs- bzw. Entwässerungsproblemen gelöst werden.

Mit dem erfindungsgemäßen Verfahren können Polymerisatzusammensetzungen mit einer großen Bandbreite an Eigenschaften erzeugt werden. Bestehende Verfahren können einfach auf das erfindungsgemäße Verfahren umgestellt werden. Aufwendige Regelungstechnik, die benötigt wird um bestimmte Parameter konstant zu halten, kann entfallen.

Im Folgenden wird die Erfindung anhand von Beispielen erklärt, die jedoch den allgemeinen Erfindungsgedanken nicht einschränken.

Die in den Beispielen aufgeführten Viskositäten und Ladungsdichten wurden gemäß den unten aufgeführten Verfahren bestimmt:

**Bestimmung der Viskosität:**

In einem 400 ml-Becherglas werden $3,4 \pm 0,01$ g Produkt eingewogen. Dann werden $302,6 \pm 0,1$ g demineralisiertes Wasser ($22 \pm 3\,°C$) so zugegeben, daß das Produkt im Lösewasser klumpenfrei verteilt ist. Die Lösung muß dann sofort mit dem Fingerrührer gerührt werden. Die Lösezeit beträgt bei $200 \pm 10$ Upm 60 Min.

Danach werden $34 \pm 0,1$ g NaCl zugesetzt, ca. 1 Min. bei einer Drehzahl von 300 - 500 Upm verteilt und innerhalb von 15 Min. durch weiteres Rühren bei $200 \pm 10$ Upm gelöst. Nach einer Temperierung auf $20 \pm 1\,°C$ wird die Spindel Nr. 1 ??? langsam, ohne die Lösung aufzurühren, eingetaucht und die Viskosität mit dem Brookfield-Viskosimeter bei 10 Upm bestimmt.

**Bestimmung der Ladungsdichte**

Die Bestimmung der Ladungsdichte wird mit einem Partikelladungsdetektor PCD 02 der Fa. Mütek/Herrsching durchgeführt. Bei der Polyelektrolyttitration (Titrator DL 21, Fa. Mettler) wird mit entgegengesetzten Polyionen (Polyethylensulfonat-Na, Polydiallyl-dimethylammoniumchlorid) bis zum isoelektronischen Punkt oder Wendepunkt titriert.

Der Titrator liefert die Angabe der Ladungsdichte in mmol Polyion/g Polymer. Durch Umrechnung mit der Molmasse des eingesetzten Monomeren wird die Ionogenität in Gewichtsprozent erhalten.

Die Entwässerbarkeit eines Schlammes wird anhand des nachstehend beschriebenen Verfahrens ermittelt:

**Bestimmung der Entwässerung auf Hochleistungszentrifugen**

500 ml einer 0,1%igen Polymerlösung werden 60 Sekunden mit einem Ultra Turrax T 25 N mit Dispergierwerkzeug S 25 N-18G (Fa. Janke & Kunkel / D-79217 Staufen) bei 24000 U/min geschert. 500 ml eines Schlammes werden in einem Rührgefäß mit der Polymerlösung unter Rühren mit einem 3-Fingerrührer bei 1000 U/min für 10 Sekunden vermischt und anschließend auf ein Sieb mit 150 mm Durchmesser mit einer Maschenweite von 0,2 mm gegeben Gemessen wird die Durchlaufzeit für 200 ml Filtrat und die Klarheit des Filtrats mit einem Klärkeil.

Klarheit 0 bedeutet keine Klärung und Klarheit 46 beste Klärung.

Es werden mindestens drei Zugabemengen geprüft, z. B. 120, 140 und 160 g Polymer pro m³ Schlamm. Je nach Versuchsergebnis wird die Reihe in Richtung weniger oder mehr Polymer erweitert.

In der Beschreibung der Beispiele werden folgende Abkürzungen verwendet:

**Abkürzungen:**

| | |
|---|---|
| ACA | Acrylamid |
| ABAH | 2,2'-Azobis-(2-amidinopropan)hydrochlorid |
| DIMAPA-Quat. | Dimethyl-aminopropyl-acrylamid mit Methylchlorid quaterniert |
| DIMAEA-Quat. | Dimethyl-aminoethyl-acrylat mit Methylchlorid quaterniert |
| V 80 | Versenex 80 (The DOW Chem. Comp.) |

**Beispiel 1**

Die Herstellung einer erfindungsgemäßen Polymerisatzusammensetzung aus ACA und DIMAPA-Quat. erfolgt durch kontinuierliche Photopolymerisation. Die Beleuchtungsstärke beträgt ca. 2000 µW/cm² bei einer Wellenlänge von 365 nm.

Ansatz:

| | |
|---|---|
| 2.250 kg | Weichwasser |
| 660 kg | DIMAPA-Quat. 60%ig |
| 3.074 kg | ACA-Lösung 50%ig |
| 1,4 kg | V 80 |
| ca. 1 kg | Schwefelsäure 50%ig |
| 150 kg | Spülwasser |
| 6.136,4 kg | Monomerlösung pH: 4 |

Die Monomerlösung fließt mit einer Temperatur von 0 °C, mit Stickstoff gespült, (Sauerstoffgehalt: 0,6 ppm) kontinuierlich mit 320 kg/h zum Polymerisationsband. In diesen Zulauf 1 werden folgende Zuläufe über einen Statikmischer zugemischt:

| | |
|---|---|
| Zulauf 2: | 7 l/h 2%ige ABAH-Lösung |
| Zulauf 3: | 7,9 l/h 1%ige Ameisensäure |
| Zulauf 4: | 60%ige DIMAPA-Quat.-Lösung, deren Dosierungsrate in einer Zeit von 60 min. von 11,5 kg/h gleichmäßig ansteigend auf 95 kg/h und gleichmäßig wieder abnehmend auf 11,5 kg/h geändert wird. Dieses Muster der Mengenänderung wird während der gesamten Versuchsdauer beibehalten. |

Nach einer Verweilzeit von 40 min. auf einem Polymerisationsband wird das feste Polymergel in einem Fleischwolf zerkleinert und auf einem Bandtrockner in Zone 1 und 2 mit 120 °C, Zone 3 mit 115 °C und Zone 4 und 5 mit 95 °C Zulufttemperatur getrocknet.

Die am Ende des Trockners im Abstand von 5 min. gezogenen Proben zeigen folgende Kenndaten:

**1. Probenahme nach einer Stunde Versuchsdauer**

| Zeit (min) | 0 | 5 | 10 | 15 | 20 | 25 | 30 | 35 | 40 | 45 | 50 | 55 | 60 |
|---|---|---|---|---|---|---|---|---|---|---|---|---|---|
| Viskosität (mPa•s) | 640 | 635 | 610 | 625 | 620 | 640 | 600 | 555 | 620 | 670 | 660 | 700 | 650 |

(fortgesetzt)

| Ionogenität (%) | 42,8 | 37,8 | 30,8 | 25,7 | 24,8 | 30,7 | 35,3 | 41,3 | 47,4 | 47,5 | 47 | 44,6 | 41 |
|---|---|---|---|---|---|---|---|---|---|---|---|---|---|

## 2. Probenahme nach sechs Stunden Versuchsdauer

| Zeit (min) | 0 | 5 | 10 | 15 | 20 | 25 | 30 | 35 | 40 | 45 | 50 | 55 | 60 |
|---|---|---|---|---|---|---|---|---|---|---|---|---|---|
| Viskosität (mPa•s) | 710 | 610 | 640 | 630 | 650 | 635 | 605 | 610 | 655 | 650 | 650 | 620 | 660 |
| Ionogenität (%) | 46,5 | 43,3 | 34,5 | 33,2 | 25 | 26,4 | 30,3 | 35,9 | 42,2 | 48,4 | 49,9 | 49,7 | 46,4 |

Die gemahlene und auf 150 bis 1000 µm gesiebte Siloprobe (Mischprobe) hat eine Viskosität von 630 mPa·s und eine Ionogenität von 40,9 %.

**Beispiel 2**

Die Herstellung einer erfindungsgemäßen Polymerisatzusammensetzung aus ACA und DIMAPA-Quat. erfolgt durch kontinuierliche Photopolymerisation. Die Beleuchtungsstärke beträgt ca. 2000 µW/cm$^2$ bei einer Wellenlänge von 365 nm.

Ansatz:

| 2.120 kg | Weichwasser |
|---|---|
| 1.500 kg | DIMAPA-Quat. 60%ig |
| 2.200 kg | ACA-Lösung 50%ig |
| 1,5 kg | V 80 |
| ca. 2 kg | Schwefelsäure 50 %ig |
| 150 kg | Spülwasser |
| 5.973,5 kg | Monomerlösung pH: 3,8 |

Die Monomerlösung fließt mit einer Temperatur von 3 °C, mit Stickstoff gespült, (Sauerstoffgehalt: 0,8 ppm) kontinuierlich mit 320 kg/h zum Polymerisationsband. In diesen Zulauf 1 werden folgende Zuläufe über einen Statikmischer zudosiert:

Zulauf 2: 7,8 l/h 1,5%ige ABAH-Lösung
Zulauf 3: 10,9 l/h 1,0%ige Ameisensäure
Zulauf 4: 60%ige DIMAPA-Quat.-Lösung, deren Dosierungsrate in einer Zeit von 60 min. von 12,8 kg/h gleichmäßig ansteigend auf 95 kg/h und gleichmäßig wieder abnehmend auf 12,8 kg/h geändert wird. Dieses Muster der Mengenänderung wird während der gesamten Versuchsdauer beibehalten.

Nach einer Verweilzeit von 45 min. wird das feste Polymergel mit einem Fleischwolf zerkleinert und auf einem Bandtrockner in Zone 1 und 2 mit 115 °C, Zone 3 mit 110 °C und Zone 4 und 5 mit 95 °C getrocknet.
Die am Ende des Trockners im Abstand von 5 min. gezogenen Proben zeigen folgende Kenndaten:

| Zeit (min) | 0 | 5 | 10 | 15 | 20 | 25 | 30 | 35 | 40 | 45 | 50 | 55 | 60 |
|---|---|---|---|---|---|---|---|---|---|---|---|---|---|
| Viskosität (mPa•s) | 435 | 435 | 445 | 450 | 460 | 500 | 500 | 450 | 480 | 470 | 470 | 430 | 425 |

(fortgesetzt)

| Ionogenität (%) | 47,6 | 48,1 | 50,3 | 53,2 | 56,3 | 58,5 | 55,1 | 54,4 | 51,5 | 51,5 | 47,1 | 45,4 | 45,8 |
|---|---|---|---|---|---|---|---|---|---|---|---|---|---|

Die gemahlene und auf 150 bis 1000 µm abgesiebte Siloprobe (Mischprobe) hat eine Viskosität von 470 mPa·s und eine Ionogenität von 53 %. Der Wassergehalt beträgt 10,5 %.

**Beispiel 3**

Die Herstellung einer erfindungsgemäßen Polymerisatzusammensetzung aus ACA und DIMAPA-Quat. erfolgt durch kontinuierliche Photopolymerisation. Die Beleuchtungsstärke beträgt ca. 2000 µW/cm$^2$ bei einer Wellenlänge von 365 nm.

Ansatz:

| 2.150 kg | Weichwasser |
|---|---|
| 3.090 kg | DIMAPA-Quat. 60%ig |
| 1.230 kg | ACA-Lösung 50%ig |
| 0,9 kg | V 80 |
| ca. 2 kg | Schwefelsäure 50%ig |
| 150 kg | Spülwasser |
| 6.522,9 kg | Monomerlösung pH: 3,8 |

350 kg/h dieser Monomerlösung werden in einem Wärmetauscher auf 2 °C abgekühlt und in einem mit 3 m$^3$ Stickstoff pro Stunde durchströmten Stripper vom gelösten Sauerstoff bis auf einen Restgehalt von 0,9 ppm befreit. Mit diesem Zulauf 1 werden vor der Aufgabe auf das Polymerisationsband die folgenden Lösungsmengen vermischt:

Zulauf 2: 9,6 l/h 1,5%ige ABAH-Lösung
Zulauf 3: 10,9 l/h 1,0%ige Ameisensäure
Zulauf 4: 50%ige ACA-Lösung, die 250 ppm V 80 enthält, deren Dosierungsrate in einer Zeit von 60 min. von 17 kg/h gleichmäßig auf 120 kg/h ansteigend und gleichmäßig abnehmend auf 17 kg/h geändert wird. Dieses Muster der Mengenänderung wird während der gesamten Versuchsdauer beibehalten.

Das nach 40 min. erhaltene Polymergel wird wie im Beispiel 2 zerkleinert und getrocknet.
Die am Trocknerende gezogenen Proben zeigen folgende Kenndaten:

| Zeit (min) | 0 | 5 | 10 | 15 | 20 | 25 | 30 | 35 | 40 | 45 | 50 | 55 | 60 |
|---|---|---|---|---|---|---|---|---|---|---|---|---|---|
| Viskosität (mPa•s) | 440 | 460 | 430 | 440 | 405 | 370 | 350 | 330 | 330 | 330 | 325 | 370 | 420 |
| Ionogenität (%) | 50,5 | 49 | 47,5 | 49 | 52 | 52,8 | 57,7 | 53,6 | 58,4 | 55,1 | 52,3 | 50,9 | 49,5 |

Die Siloprobe (Mischprobe) des Endproduktes hat eine Viskosität von 350 mPa·s und eine Ionogenität von 53,0 Gew.-%.

**Beispiel 4**

Die Herstellung einer erfindungsgemäßen Polymerisatzusammensetzung aus ACA, DIMAPA-Quat und DIMAEA-Quat. erfolgt durch kontinuierliche Photopolymerisation. Die Beleuchtungsstärke beträgt ca. 2000 µW/cm$^2$ bei einer Wellenlänge von 365 nm.

Ansatz:

| | |
|---|---|
| 2.120 kg | Weichwasser |
| 1.500 kg | DIMAPA-Quat. 60%ig |
| 2.200 kg | ACA-Lösung 50%ig |
| 1,5 kg | V 80 |
| ca. 2 kg | Schwefelsäure 50%ig |
| 150 kg | Spülwasser |
| 5.972,5 kg | Monomerlösung pH: 3,8 |

Diese Monomerlösung bildet mit 320 kg/h den Zulauf 1. Sie wird gekühlt und mit Stickstoff gespült wie in Beispiel 3. Vor dem Polymerisationsband zugemischt werden folgende Zuläufe:

Zulauf 2: 7,8 l/h 1,5%ige ABAH-Lösung
Zulauf 3: 10,9 l/h 1,0%ige Ameisensäure
Zulauf 4: 80%ige DIMAEA-Quat.-Lösung, deren Dosierungsrate in einer Zeit von 45 min. von 15 kg/h gleichmäßig auf 95 kg/h ansteigend und wieder gleichmäßig auf 15 kg/h abnehmend geändert wird. Dieses Muster der Mengenänderung wird während der Versuchsdauer von ca. 18 Std. beibehalten.

Das nach 45 Min. Verweilzeit vom Polymerisationsband abgezogene Gel wird wie in Beispiel 2 zerkleinert und getrocknet.

Die am Trocknerende im Abstand gezogenen Proben haben folgende Kenndaten:

| Zeit (min) | 0 | 5 | 10 | 15 | 20 | 25 | 30 | 35 | 40 | 45 |
|---|---|---|---|---|---|---|---|---|---|---|
| Viskosität (mPa•s) | 555 | 590 | 530 | 585 | 545 | 560 | 530 | 520 | 530 | 550 |
| Ionogenität (%) | 61,3 | 61,6 | 54 | 50,6 | 48 | 46,8 | 50,3 | 53,5 | 58,6 | 61 |

Nach dem Trockner wird das Polymer gemahlen, auf die Kornfraktion 150 -1000 μm gesiebt und in einen NAUTA-Mischer gefördert. Eine Probe aus dem Mischer hat eine Viskosität von 540 mPa·s und eine Ionogenität von 55 %.

**Anwendungstechnische Prüfung (Labor)**

Bei diesem Beispiel wird die Entwässerbarkeit eines Faulschlamms einer Kläranlage, der mit der erfindungsgemäßen Polymerisatzusammensetzung und mit Polymerisaten gemäß des Standes der Technik versetzt worden ist, verglichen.

Der Schlamm hatte einen pH-Wert von 7,1 und wies eine Trockensubstanz von 3,5 Gew.-% auf.

| Zugabe-Menge[1] g/m$^3$ | Polymer aus Beispiel 3 | | Vergleich 1 Praestol® 644 BC[2] Viskosität: 365 mPa.s Ionogenität: 52 % | | Vergleich 2 Praestol® 650 BC[2] Viskosität: 370 mPa.s Ionogenität: 39 % | |
|---|---|---|---|---|---|---|
| | Zeit für 200 ml Filtrat (sec) | Klarheit Klärkeil 0 - 46 | Zeit für 200 ml Filtrat (sec) | Klarheit Klärkeil 0 - 46 | Zeit für 200 ml Filtrat (sec) | Klarheit Klärkeil 0 - 46 |
| 160 | 29 | 26 | | | | |
| 170 | 25 | 27 | | | | |
| 180 | 18 | 29 | | | | |
| 190 | | | 27 | 31 | | |
| 200 | | | 24 | 33 | | |
| 220 | | | 16 | 34 | | |
| 260 | | | | | 50 | 26 |
| 280 | | | | | 31 | 30 |

[1] Dosierung aus 0,1%iger Lösung
[2] Nicht erfindungsgemäße Polymere aus ACA/DIMAPA-Quat, die von der Stockhausen GmbH & Co.KG hergestellt werden.

Es zeigt sich, daß mit der erfindungsgemäßen Polymerisatzusammensetzung die Feststoffe bei nahezu gleichbleibender Klarheit des Filtrats und vergleichbarer Geschwindigkeit jedoch mit weniger Polymerisat abgetrennt werden können.

**Anwendungstechnische Prüfung (Kläranlage)**

Bei diesem Beispiel wird Faulschlamms einer Kläranlage auf einer Zentrifuge entwässert, der mit der erfindungsgemäßen Polymerisatzusammensetzung und mit Polymerisaten gemäß des Standes der Technik versetzt worden ist.

Zentrifuge:	Typ: Westfalia CA 505
	Drehzahl: 3520 min$^{-1}$

Faulschlamm:	Menge: 29 m$^3$/h
	Trockensubstanz: 2,7 %

| Polymer | Polymerlösung | | Dickschlamm TS[3] | AG[4] |
|---|---|---|---|---|
| | Konzentr. G/l | Verbrauch m$^3$/h | % | % |
| aus Beispiel 2 | 5 | 1,31 | 33 | 98,6 |
| Vergleich 3 Praestol®[1]853 BC | 5 | 1,32 | 26,9 | 98,7 |
| Vergleich 4 Praesol®[2] A 7112 | 5 | 1,30 | 29,3 | 98,7 |

[1] Nicht erfindungsgemäßes Copolymer aus ACA und DIMAPA-Quat., Viskosität: 460 mPa.s, Ionogenität: 54 %, Hersteller: Stockhausen GmbH & Co.KG

[2] Nicht erfindungsgemäßes Copolymer aus ACA und DIMAEA-Quat., Viskosität: 505 mPa.s, Ionogenität: 63 % Hersteller: Stockhausen GmbH & Co.KG

[3] TS = Trockensubstanz

[4] AG = Abscheidegrad

$$AG\ (\%) = \frac{TS_{Austrag} \cdot (TS_{Zulauf} - TS_{Zentrat}) \cdot 100}{TS_{Zulauf} \cdot (TS_{Austrag} - TS_{Zentrat})}$$

Es zeigt sich, daß mit der erfindungsgemäßen Polymerisatzusammensetzung eine bessere Schlammeindikkung bei gleichbleibendem Abscheidegrad und Polymerisatzusatz erzielen läßt.

**Patentansprüche**

**1.** Wasserlösliche, vorzugsweise pulverförmige Polymerisatzusammensetzungen erhältlich durch kontinuierliche Polymerisation von mindestens einem ungesättigten Monomeren, wobei mindestens ein die Polymerisation beeinflussender Parameter gemäß einem wiederkehrenden Muster geändert wird.

**2.** Polymerisatzusammensetzungen nach Anspruch 1, **dadurch gekennzeichnet, daß** das Muster eine Schwingung um einen frei wählbaren Mittelwert ist.

**3.** Polymerisatzusammensetzungen nach Anspruch 2, **dadurch gekennzeichnet, daß** die Schwingung harmonisch oder unharmonisch und vorzugsweise ungedämpft ist.

**4.** Polymerisatzusammensetzungen nach einem der Ansprüche 1 bis 3, **dadurch gekennzeichnet, daß** mindestens einer der fogenden Parameter:

- die Konzentration des/der Monomeren,
- die Katalysatormenge,
- die Molgewichtsreglermenge,
- der pH-Wert der Monomerlösung und/oder
- die Zusammensetzung der Monomerenlösung

geändert wird.

**5.** Polymerisatzusammensetzungen nach einem der Ansprüche 1 bis 4, **dadurch gekennzeichnet, daß** die Polymerisation auf einem bewegten Träger erfolgt.

**6.** Polymerisatzusammensetzungen nach einem der Ansprüche 1 bis 5, **dadurch gekennzeichnet, daß** es Co- oder Terpolymerisatzusammensetzungen sind.

**7.** Polymerisatzusammensetzungen nach einem der Ansprüche 1 bis 6, **dadurch gekennzeichnet, daß** es nichtionogene, anionische oder kationische Polymerisatzusammensetzungen sind.

**8.** Verwendung der Polymerisatzusammensetzungen gemäß einem der Ansprüche 1 bis 7 zur Flockung und/oder zur Entwässerung von Suspensionen.

**9.** Verfahren zur kontinuierlichen Herstellung von wasserlöslichen Polymerisatzusammensetzungen durch Polymerisation von mindestens einem ungesättigten Monomeren, **dadurch gekennzeichnet, daß** mindestens ein die Polymerisation beeinflussender Parameter gemäß einem wiederkehrenden Muster geändert wird.

**10.** Verfahren nach Anspruch 9, **dadurch gekennzeichnet, daß** das Muster eine Schwingung um einen frei wählbaren Mittelwert ist.

**11.** Verfahren nach Anspruch 10, **dadurch gekennzeichnet, daß** die Schwingung harmonisch oder unharmonisch und vorzugsweise ungedämpft ist.

**12.** Verfahren nach einem der Ansprüche 9 bis 11, **dadurch gekennzeichnet, daß** mindestens einer der fogenden Parameter:

- die Konzentration des/der Monomeren,
- die Katalysatormenge,
- die Molgewichtsreglermenge,
- der pH-Wert der Monomerlösung und/oder
- die Zusammensetzung der eingesetzten Monomeren

geändert wird.

**13.** Verfahren nach einem der Ansprüche 9 bis 12, **dadurch gekennzeichnet, daß** die Polymerisation auf einem bewegten Träger erfolgt.

**14.** Verfahren nach einem der Ansprüche 9 bis 13, **dadurch gekennzeichnet, daß** die Polymerisatzusammensetzung nach der Polymerisation pulverisiert wird.

**Claims**

**1.** water-soluble, preferably powdered polymer compositions which can be obtained by continuous polymerization of at least one unsaturated monomer, at least one parameter biasing the polymerization being varied according to a recurrent pattern.

**2.** The polymer compositions according to claim 1, **characterized in that** said pattern is an oscillation about a mean value which can be selected at random.

**3.** The polymer compositions according to claim 2, **characterized in that** the oscillation is harmonic or anharmonic and preferably undamped.

**4.** The polymer compositions according to any of claims 1 to 3, **characterized in that** at least one of the following parameters is subject to variation:

- the concentration of monomer(s),

- the amount of catalyst,
- the amount of molecular weight modifier,
- the pH value of the monomer solution, and/or
- the composition of the monomer solution.

5. The polymer compositions according to any of claims 1 to 4, **characterized in that** the polymerization is effected on a moving support.

6. The polymer compositions according to any of claims 1 to 5, **characterized in that** said compositions are co- or terpolymer compositions.

7. The polymer compositions according to any of claims 1 to 6, **characterized in that** said compositions are non-ionogenic, anionic or cationic polymer compositions.

8. Use of the polymer compositions according to any of claims 1 to 7 in the flocculation and/or dewatering of suspensions.

9. A process for the continuous production of preferably water-soluble polymer compositions by polymerizing at least one unsaturated monomer, **characterized in that** at least one parameter biasing the polymerization is varied according to a recurrent pattern.

10. The process according to claim 9, **characterized in that** said pattern is an oscillation about a mean value which can be selected at random.

11. The process according to claim 10, **characterized in that** the oscillation is harmonic or anharmonic and preferably undamped.

12. The process according to any of claims 9 to 11, **characterized in that** at least one of the following parameters is subject to variation:

- the concentration of monomer(s),
- the amount of catalyst,
- the amount of molecular weight modifier,
- the pH value of the monomer solution, and/or
- the composition of the monomers employed.

13. The process according to any of claims 9 to 12, **characterized in that** the polymerization is effected on a moving support.

14. The process according to any of claims 9 to 13, **characterized in that** the polymer composition is powdered subsequent to polymerization.

**Revendications**

1. Compositions de polymères hydrosolubles, de préférence pulvérulentes, pouvant être obtenues par polymérisation continue d'au moins un monomère insaturé, dans laquelle au moins un paramètre influant sur la polymérisation est modifié selon un modèle répétitif.

2. Compositions de polymères selon la revendication 1, **caractérisées en ce que** le modèle est une oscillation autour d'une valeur moyenne pouvant être choisie librement.

3. Compositions de polymères selon la revendication 2, **caractérisées en ce que** l'oscillation est harmonique ou non harmonique et de préférence permanente.

4. Compositions de polymères selon l'une quelconque des revendications 1 à 3, **caractérisées en ce qu'**au moins l'un des paramètres suivants :

- la concentration du/des monomère(s),
- la quantité de catalyseur,
- la quantité de régulateur de masse moléculaire,
- le pH de la solution de monomère(s) et/ou
- la composition de la solution de monomère(s) est modifié.

5. Compositions de polymères selon l'une quelconque des revendications 1 à 4, **caractérisées en ce que** la polymérisation s'effectue sur un support mis en mouvement.

6. Compositions de polymères selon l'une quelconque des revendications 1 à 5, **caractérisées en ce que** ce sont des compositions de copolymères ou terpolymères.

7. Compositions de polymères selon l'une quelconque des revendications 1 à 6, **caractérisées en ce que** ce sont des compositions de polymères non ioniques, anioniques ou cationiques.

8. Utilisation des compositions de polymères selon l'une quelconque des revendications 1 à 7, pour la floculation et/ou la déshydratation de suspensions.

9. Procédé pour la préparation continue de compositions de polymères hydrosolubles, par polymérisation d'au moins un monomère insaturé, **caractérisé en ce qu'**au moins un paramètre influant sur la polymérisation est modifié selon un modèle répétitif.

10. Procédé selon la revendication 9, **caractérisé en ce que** le modèle est une oscillation autour d'une valeur moyenne pouvant être choisie librement.

11. Procédé selon la revendication 10, **caractérisé en ce que** l'oscillation est harmonique ou non harmonique et de préférence permanente.

12. Procédé selon l'une quelconque des revendications 9 à 11, **caractérisées en ce qu'**au moins l'un des paramètres suivants :

- la concentration du/des monomère(s),
- la quantité de catalyseur,
- la quantité de régulateur de masse moléculaire,
- le pH de la solution de monomère(s) et/ou
- la composition de la solution des monomères utilisés

est modifié.

13. Procédé selon l'une quelconque des revendications 9 à 12, **caractérisé en ce que** la polymérisation s'effectue sur un support mis en mouvement.

14. Procédé selon l'une quelconque des revendications 9 à 13, **caractérisé en ce que** la composition de polymère est pulvérisée après la polymérisation.